# EUROPÄISCHE PATENTSCHRIFT

(11) **EP 1 619 781 B1**
(45) Veröffentlichungstag und Bekanntmachung des Hinweises auf die Patenterteilung: **14.09.2016**
(21) Anmeldenummer: 04017139.9
(22) Anmeldetag: 21.07.2004
(51) Int. Cl.: H02M 1/00, H02M 5/40

(54) **Schaltungsanordnung für einen Umrichter**
Circuitry for a converter
Circuit pour un convertisseur

(43) Veröffentlichungstag der Anmeldung: 25.01.2006
(73) Patentinhaber: ThyssenKrupp Aufzugswerke GmbH, 73765 Neuhausen (DE)
(72) Erfinder: Herrmann, Günther, 73 669 Lichtenwald (DE)
(74) Vertreter: Hoeger, Stellrecht & Partner Patentanwälte mbB

(56) Entgegenhaltungen:
- EP-A- 1 296 441
- US-A- 4 247 888
- SHIGETA M ET AL: "A development of novel dc48v power supply system utilizing 18-pulse rectified active dcl and resonant converter" INTELEC 2002. 24TH. INTERNATIONAL TELECOMMUNICATIONS ENERGY CONFERENCE. MONTREAL, QUEBEC, CANADA, SEPT. 29 - OCT. 3, 2002, INTELEC. INTERNATIONAL TELECOMMUNICATIONS ENERGY CONFERENCE, NEW YORK, NY : IEEE, US, Bd. CONF. 24, 29. September 2002 (2002-09-29), Seiten 309-316, XP010614639 ISBN: 0-7803-7512-2

## Beschreibung

Die Erfindung betrifft eine Schaltungsanordnung für einen Umrichter mit den Merkmalen des Oberbegriffes von Patentanspruch 1.

Derartige Schaltungsanordnungen kommen bei Frequenzumrichtern zum Einsatz, die in zunehmendem Maße zur Ansteuerung von Elektroantrieben Verwendung finden. Hierzu kann der netzseitige Stromrichter als Gleichrichter ausgestaltet sein, und lastseitig kann an den Gleichspannungszwischenkreis ein Wechselrichter angeschlossen werden, der die vom Gleichspannungszwischenkreis bereitgestellte Gleichspannung in die zur Ansteuerung des Elektroantriebes erforderliche Wechselspannung umrichtet. Auch der netzseitige Stromrichter kann als Wechselrichter ausgestaltet sein.

Der Gleichspannungszwischenkreis weist zumindest einen Zwischehkreiskondensator auf, der zwischen einen ersten und einen zweiten Strompfad geschaltet ist. Die Strompfade führen zum Pluspol bzw. zum Minuspol des mindestens einen Zwischenkreiskondensators. Mittels des Zwischerikreiskondensators soll eine möglichst geringe Welligkeit der Zwischenkreisspannung und eine Unterdrückung des hochfrequenten Störspektrums des lastseitig an den Gleichspannungszwischenkreis anschließbaren Wechselrichters erzielt werden. Dies erfordert in vielen Fällen sehr hohe Kapazitätswerte und damit auch ein beachtliches Bauvolumen. In den Scheitelwerten der Netzspannung hat daher der Ladestrom des mindestens einen Zwischenkreiskondensators einen impulsartigen Verlauf. Daraus ergibt sich ein unerwünscht hoher Oberschwingungsgehalt des Netzstromes sowie eine hohe Effektivbelastung des Zwischenkreiskondensators.

Um Rückwirkungen auf das treibende Netz gering zu halten, ist der zusätzliche Einsatz von Drosseln bekannt, die entweder in den Gleichspannungszwischenkreis geschaltet werden oder an die Eingänge des netzseitigen Stromrichters. Die Drosseln müssen hierbei eine hohe Induktivität aufweisen, und dies wiederum ist mit einem großen Bauvolumen und einem hohen Gewicht verbunden.

Aus der Veröffentlichung von M. Shigeta et al.: "A Development of Novel DC48V Power Supply System Utilizing 18-Pulse Rectified Active DCL and Resonant Converter" ist ein Gleichspannungsversorgungsgerät bekannt mit einem netzseitigen Gleichrichter, der über einen Gleichspannungszwischenkreis mit einem DC/DC-Stromrichter verbunden ist. Der Gleichrichter kann an eine NetzWechselspannung angeschlossen werden, die gleichgerichtet, geglättet und als 48V-Gleichspannung vom DC/DC-Stromrichter ausgegeben wird. Der Gleichspannungszwischenkreis umfasst einen Zwischenkreiskondensator, der in Reihe geschaltet ist zu einer Kompensationsschaltung. Letztere umfasst eine Spannungsquelle in Form eines Kompensationskondensators sowie eine elektronische Schalteinheit zum Einkoppeln einer Kompensationsspannung. Mittels des Gleichspannungsversorgungsgerätes kann insbesondere für Telekommunikationsgeräte und Datenübertragungsgeräte eine Gleichspannung von 48V bereitgestellt werden.

Aus der Patentschrift US-A-4 247 888 ist ein Frequenzumrichter bekannt mit einem netzseitigen Gleichrichter, der über einen Gleichspannungszwischenkreis mit einem Wechselrichter verbunden ist. Der Gleichspannungszwischenkreis weist einen Zwischenkreiskondensator auf, und zur Glättung der vom netzseitigen Gleichrichter bereitgestellten Spannung kommt ein LC-Kreis zum Einsatz mit einem Glättungskondensator und einer in Reihe zu diesem geschalteten Induktivität. Über Thyristoren, die von einer elektronischen Schalteinheit gesteuert werden, kann vom LC-Kreis eine Kompensationsspannung parallel zum Zwischenkreiskondensator in den Gleichspannungszwischenkreis eingekoppelt werden.

Aufgabe der vorliegenden Erfindung ist es, eine Schaltungsanordnung der eingangs genannten Art derart weiterzubilden, daß sie bei kleinerem Bauvolumen den Oberschwingungsgehalt des Netzstromes gering halten kann, wobei die Schaltungsanordnung eine Rückspeisung von Energie in das treibende Netz ermöglicht.

Diese Aufgabe wird durch eine Schaltungsanordnung mit den Merkmalen von Patentanspruch 1 gelöst.

Durch Einkopplung einer Kompensationsspannung in den ersten oder zweiten Strompfad des Gleichspannungszwischenkreises in Reihe zum Zwischenkreiskondensator kann der Stromfluß vom netzseitigen Stromrichter zu dem mindestens einen Zwischenkreiskondensator kontrolliert werden kann. Dadurch kann auf konstruktiv einfache Weise eine praktisch wechselanteilsfreie Zwischenkreisspannung an dem mindestens einen Zwischenkreiskondensator erzielt werden. Es hat sich gezeigt, daß die Spannungsquelle der Kompensationsschaltung lediglich für den erforderlichen Eingangsgleichstrom des Gleichspannungszwischenkreises ausgelegt werden muß und lediglich eine Kompensationsspannung bereitstellen muß in der Größenordnung der Spannung des Wechselanteils der vom netzseitigen Stromrichter gleichgerichteten Netzspannung. Dies ist für den Einsatz bei dreiphasigen Netzeinspeisungen von besonderem Vorteil. Es hat sich nämlich gezeigt, daß bei den üblichen Drehstromnetzen mit maximalen Spannungswerten von 400 V oder 500 V lediglich Kompensationsspannungen im Bereich von etwa 50 V bzw. etwa 60 V erforderlich sind. In diesem Spannungsbereich sind sehr verlustarm zu schaltende und kostengünstige MOSFET-Transistoren verfügbar, die zur Ausgestaltung der Kompensationsschaltung herangezogen werden können.

Der Energiefluß zu dem mindestens einen Zwischenkreiskondensator kann mittels der Kompensationsschaltung besonders einfach derart gesteuert werden, daß der Stromfluß vom netzseitigen Stromrichter zum Zwischenkreiskondensator konstant gehalten wird. Damit können Netzströme erzielt werden mit einem Oberschwingungsgehalt (Total Harmonic Distortion THD) von nur ca. 30% oder weniger. Ein derartiger THD-Wert kann mittels der erfindungsgemäßen Schaltungsanordnung auch im Teillastbetrieb und im Rückspeisebetrieb erzielt werden, also nicht nur im Nennbetriebspunkt. Es können somit Netz-Blindstrombefastungen sehr gering gehalten werden.

Es hat sich auch gezeigt, daß bei Einsatz der erfindungsgemäßen Schaltungsanordnung zum Antrieb eines Elektromotors im Gegensatz zu niederkapazitiven Zwischenkreisumrichtern oder Matrixumrichtern eine Reduktion des Effektivwertes der Motorspannung nicht erforderlich ist. Es kann dadurch ein hoher Gesamtwirkungsgrad erzielt werden.

Da der netzseitige Stromrichter als getaktete Einspeise-Rückspeise-Einheit ausgestaltet ist, kann die erfindungsgemäße Schaltungsanordnung sowohl im motorischen Betrieb als auch im generatorischen Betrieb zum Einsatz kommen. Es kann also nicht nur einem Elektroantrieb Energie aus einem treibenden Netz bereitgestellt werden, sondern es kann auch umgekehrt Energie in das treibende Netz zurückgespeist werden, wobei die Einspeisung sehr netzfreundlich ist, d. h. sie verursacht nur geringe Netzrückwirkungen. Die Einspeise-Rückspeise-Einheit ist hierbei mit der Grundfrequenz des treibenden Netzes getaktet. Dies ermöglicht einen konstruktiv einfachen Aufbau des netzseitigen Stromrichters. Trotz des einfachen Aufbaus kann durch die Einkopplung einer Kompensationsspannung in Reihe zum Zwischenkreiskondensator eine praktisch wechselanteilsfreie Zwischenkreisspannung erzielt werden.

Es kann vorgesehen sein, daß an den Stromrichter netzseitig Drosseln angeschlossen sind, diese brauchen nur eine verhältnismäßig geringe Induktivität aufweisen. Es hat sich gezeigt, daß mittels der erfindungsgemaßen Schaltungsanordnung auch bei der Möglichkeit einer Energierückspeisung ein bedeutend geringeres Bauvolumen erzielt werden kann, als dies bisher üblich ist.

Ein weiterer Vorteil der erfindungsgemäßen Schaltungsanordnung liegt darin, daß die Kapazitätswerte des mindestens einen Zwischenkreiskondensators frei wählbar sind, es können also niederkapazitive oder hochkapazitive Zwischenkreiskondensatoren zum Einsatz kommen. Dadurch ist es möglich, bei hohen Motorinduktivitätswerten im Falle des Abschaltens deren Energie auf genügend große Zwischenkreisondensatoren zu leiten. Es sind keine zusätzlichen Schutzschaltungen erforderlich, wie zum Beispiel bei niederkapazitiven Zwischenkreisumrichtern oder Matrixumrichtern. Hohe Motorinduktivitätswerte sind insbesondere bei langsam drehenden permanenterregten Synchronmaschinen anzutreffen.

Es ist darüber hinaus zu erwähnen, daß mittels der erfindungsgemäßen Schaltungsanordnung sehr geringe Drehmomentenpulsationen erzielt werden können, da die Zwischenkreisspannung nahezu keine Welligkeit aufweist.

Im Netzrückspeise-Betrieb werden bei Einsatz der erfindungsgemäßen Schaltungsanordnung zur Energieversorgung von Elektromotoren die Motorwicklungen nur wenig durch Schaltspannungen belastet, da die Zwischenkreisspannung nicht höher ist als die Amplitude der Netzspannung.

Wie bereits erläutert, ermöglicht die erfindungsgemäße Schaltungsanordnung eine einfache und damit kostengünstige Energierückspeiseschaltung, und insgesamt ergibt sich eine deutliche Einsparung an Bauvolumen und Gewicht.

Erfindungsgemäß ist die Spannungsquelle als zumindest ein Kompensationskondensator ausgebildet. Dieser wirkt als Energiespeicher, der gesteuert Energie aufnimmt bzw. abgibt. Die Kompensationsschaltung mit zumindest einem Kompensationskondensator kann derart ausgestaltet sein, daß keine Wirkleistung benötigt wird. Dies kann anschaulich so erklärt werden, daß bei Eingangsspannungen über der mittleren Zwischenkreisspannung dem mindestens einem Kompensationskondensator Energie zugeführt wird und bei kleineren Eingangsspannungen diese Energie wieder abgegeben wird. Die Energie wird im Kompensationskondensator gepuffert und der Energiefluß kann elektronisch gesteuert werden. Der Einsatz zumindest eines Kompensationskondensators ist auch deshalb von Vorteil, da mittels Kondensatoren eine beachtlich höhere Energiedichte erzielt werden kann als mittels üblicher Drosseln.

Der Einsatz der Spannungsquelle als mindestens ein Kompensationskondensator erlaubt es, dem Zwischenkreiskondensator eine höhere oder niedere Spannung bereitzustellen als jene von der Netzspannung vorgegebene Spannung. Hierzu ist es lediglich erforderlich, mittels der Spannungsquelle die gewünschte Wirkleistung einzuspeisen oder aufzunehmen.

Von Vorteil ist es hierbei, wenn an den mindestens einen Kompensationskondensator eine externe Spannungsquelle anschließbar ist.

Bei einer besonders bevorzugten Ausführungsform der erfindungsgemäßen Schaltungsanordnung ist mittels der Kompensationsschaltung eine Kompensationsspannung einkoppelbar, die dem negativen Wechselspannungsanteil der Ausgangsspannung des Stromrichters entspricht, oder netzseitig an den Gleichspannungszwischenkreis angeschlossen ist. Damit kann eine praktisch wechselanteilsfreie Zwischenkreisspannung erzielt werden, mit der ein lastseitiger Wechselrichter versorgt werden kann.

Günstig ist es, wenn die Kompensationsschaltung eine elektronische Schalteinheit aufweist, an die die Spannungsquelle angeschlossen ist. Die elektronische Schalteinheit kann beispielsweise als elektrische Verbindung zwischen dem mindestens einen Kompensationskondensator und dem Gleichspannungszwischenkreis ausgestaltet sein, so daß mittels der elektronischen Schalteinheit dem Kompensationskondensator wahlweise Energie zugeführt oder von diesem Energie abgegeben werden kann, um auf diese Weise einen gleichbleibenden Stromfluß zwischen dem netzseitigen Stromrichter und dem mindestens einen Zwischenkreiskondensator zu erzielen. An dem mindestens einen Zwischenkreiskondensator ist somit eine praktisch wechselanteilsfreie Zwischenkreisspannung abgreifbar.

Die Schalteinheit kann beispielsweise als Zweiquadrantensteller oder als Vierquadrantensteller ausgestaltet sein. Der Zweiquadrantensteller kann bei einem reinen Speisebetrieb und der Vierquadrantensteller kann bei einem Speiseund Rückspeisebetrieb zum Einsatz kommen.

Vorzugsweise ist die Schalteinheit mittels einer Regeleinheit ansteuerbar, wobei die Regeleinheit auf Basis eines Sollwert-Istwert-Vergleiches der Schalteinheit zumindest ein Steuersignal bereitstellt. Es kann beispielsweise vorgesehen sein, dass als Istwert der vom netzseitigen Stromrichter zu dem mindestens einen Zwischenkreiskondensator fließende Zwischenkreisstrom erfasst wird und dieser mit einem vorgebbaren Sollwert des Zwischenkreisstromes verglichen wird. Die Ansteuerung der Schalteinheit kann dann in Abhängigkeit der Abweichung des Istwertes vom Sollwert erfolgen. Es kann dadurch auf konstruktiv einfache Weise sichergestellt werden, dass sich mittels der in den ersten und/oder zweiten Strompfad des Gleichspannungszwischenkreises eingekoppelten Kompensationsspannung ein praktisch wechselanteilsfreier Zwischenkreisstrom einstellt.

Es kann auch vorgesehen sein, dass als Istwert die eingekoppelte Kompensationsspannung erfasst wird und diese mit einem Sollwert der Kompensationsspannung verglichen wird.

Günstig ist es, wenn die Regeleinheit eine Ansteuerlogik aufweist, der ein Vergleichsglied zum Vergleich eines Istwertes mit einem Sollwert zugeordnet ist. Dies ermöglicht auf konstruktiv einfache Weise beispielsweise eine Regelung der Kompensationsspannung dergestalt, daß die Kompensationsspannung dem negativen Wechselspannungsanteil der Ausgangsspannung des Stromrichters entspricht, der netzseitig an den Gleichspannungszwischenkreis angeschlossen ist.

Es kann vorgesehen sein, daß die Kompensationsschaltung ein Rechenglied aufweist zur Berechnung des negativen Wechselspannungsanteils der Ausgangsspannung des Stromrichters. Dem Rechenglied können die elektrischen Parameter des netzseitigen Stromrichters vorgegeben werden, und es können dem Rechenglied die Differenzspannungen der netzseitig am Stromrichter anliegenden Netzspannungen eingegeben werden. Aus den Differenzspannungen kann dann mittels des Rechengliedes der negative Wechselspannungsanteil der Ausgangsspannung des Stromrichters berechnet werden, und dieser negative Wechselspannungsanteil kann als Sollwert dem voranstehend erläuterten Vergleichsglied bereitgestellt werden.

Zur Erfassung des Ist-Wertes der eingekoppelten Kompensationsspannung kann die Schaltungsanordnung eine Spannungsmeßeinrichtung umfassen.

Alternativ zum Einsatz einer Recheneinheit kann auch vorgesehen sein, daß die erfindungsgemäße Schaltungsanordnung eine die Ausgangsspannung des netzseitigen Stromrichters erfassende Meßeinrichtung umfaßt, der ein Filter zugeordnet ist sowie ein nachgeschalteter Inverter, so daß der negative Wechselspannungsanteil der Ausgangsspannung des Stromrichters meßtechnisch erfaßtbar ist.

Von besonderem Vorteil ist es, wenn die Kompensationsschaltung ein Glättungsfilter aufweist, insbesondere ein LC-Glättungsfilter.

Der netzseitige Stromrichter kann beispielsweise in Form eines getakteten Wechselrichters ausgestaltet sein.

Die Erfindung ist nicht auf die Ausgestaltung der voranstehend erläuterten Schaltungsanordnung begrenzt. Die Erfindung umfaßt vielmehr auch einen Umrichter mit einer Schaltungsanordnung der voranstehend erläuterten Art und mit einem lastseitig an den Gleichspannungszwischenkreis angeschlossenen Wechselrichter.

Die nachfolgende Beschreibung einer bevorzugten Ausführungsform der Erfindung dient im Zusammenhang mit der Zeichnung der näheren Erläuterung. Es zeigen:
- Figur 1:: eine Prinzipdarstellung eines Frequenzumrichters mit einer erfindungsgemäßen Schaltungsanordnung;
- Figur 2:: ein Blockschaltbild des Frequenzumrichters aus Figur 1;
- Figur 3:: den zeitlichen Verlauf der Ausgangsspannung eines netzseitigen Stromrichters der Schaltungsanordnung;
- Figur 4:: den zeitlichen Verlauf einer Kompensationsspannung;
- Figur 5:: den zeitlichen Verlauf einer Zwischenkreisspannung und eines Zwischenkreisstromes.

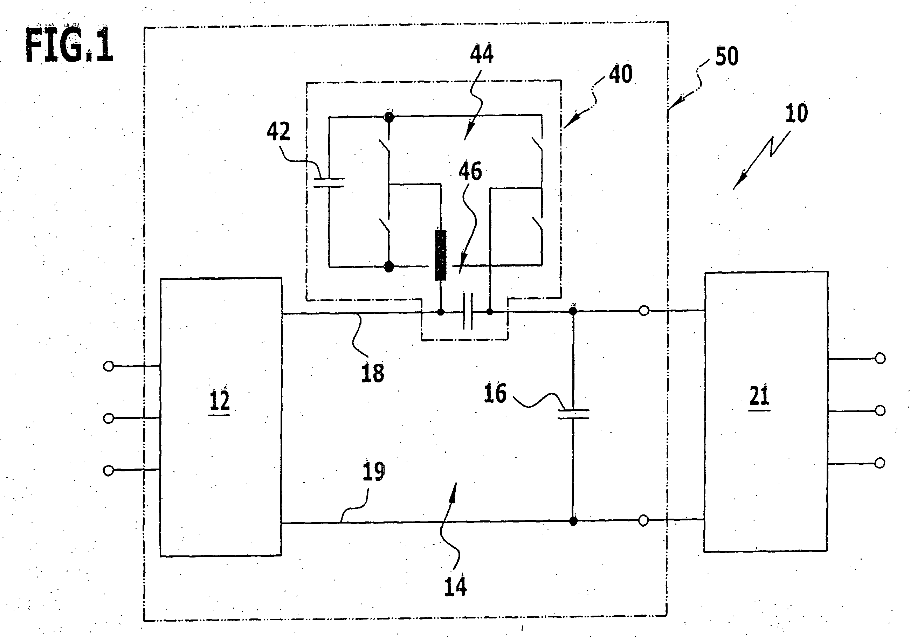

Figur 1 zeigt in Form einer schematischen Prinzipdarstellung einen Frequenzumrichter 10 mit einem netzseitigen Stromrichter 12 und einem lastseitigen Wechselrichter 21, die über einen Gleichspannungszwischenkreis 14 mit einem ersten Strompfad 18 und einem zweiten Strompfad 19 elektrisch miteinander verbunden sind. An den Stromrichter 12 kann netzseitig eine Netzspannung angeschlossen werden, und mittels des Wechselrichters 21 kann beispielsweise ein Drehstrommotor mit elektrischer Energie versorgt werden.

Der Gleichspannungszwischenkreis 14 umfasst einen zwischen die beiden Strompfade 18 und 19 geschalteten Zwischenkreiskondensator 16.

Der Frequenzumrichter 10 weist eine Kompensationsschaltung 40 auf mit einer Spannungsquelle 42 in Form eines Kompensationskondensators und mit einer elektronischen Schalteinheit 44, an die der Kompensationskondensator 42 angeschlossen ist und über die eine vom Kompensationskondensator 42 bereitgestellte Kompensationsspannung in den ersten Strompfad 18 des Gleichspannungszwischenkreises 14 eingekoppelt werden kann. Die Einkopplung erfolgt über ein LC-Glättungsfilter 46.

Der netzseitige Stromrichter 12 bildet in Kombination mit der Kompensationsschaltung 40 und dem Gleichspannungszwischenkreis 14 eine erfindungsgemäße Schaltungsanordnung, die insgesamt mit dem Bezugszeichen 50 belegt ist.

Mittels der Kompensationsschaltung 40 kann in den ersten Strompfad 18 eine Kompensationsspannung eingekoppelt werden, die dem negativen Wechselspannungsanteil der Ausgangsspannung des Stromrichters 12 entspricht. Dies hat zur Folge, daß am Zwischenkreiskondensator 16 eine wechselanteilsfreie Zwischenkreisspannung anliegt, die als Eingangsspannung dem Wechselrichter 21 bereitgestellt werden kann.

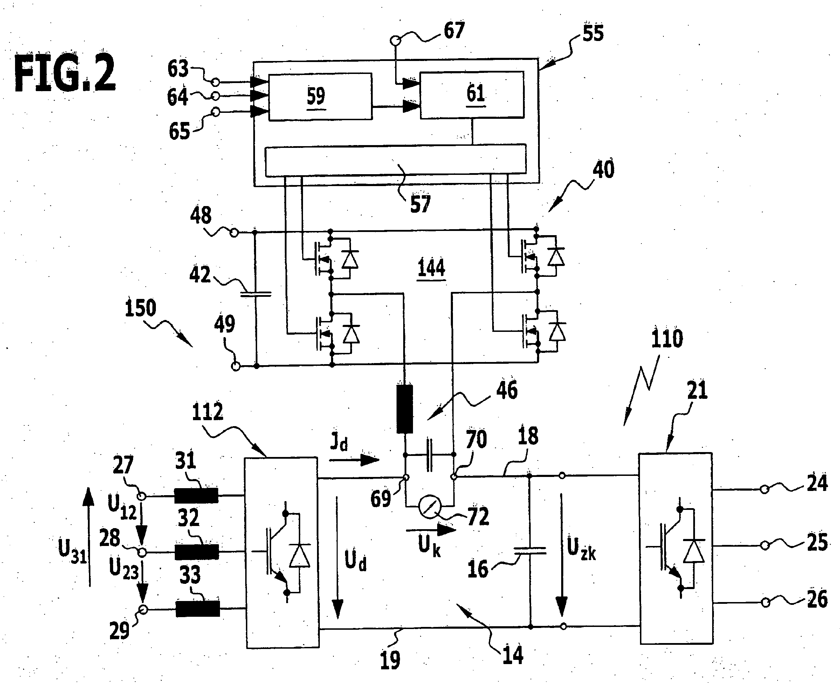

In Figur 2 ist ein Ausführungsbeispiel detaillierter dargestellt am Beispiel eines Frequenzumrichters 110 mit einer Schaltungsanordnung 150 und einem netzseitigen Stromrichter in Form eines Wechselrichters 112. Die Schalteinheit 44 ist als Vierquadrantensteller ausgebildet. Derartige Vierquadrantensteller sind dem Fachmann an sich bekannt, er ist daher in der Zeichnung nur grob schematisch dargestellt.

Der lastseitige Wechselrichter 21 weist drei Ausgänge in Form von Motoranschlüssen 24, 25 und 26 auf, und der netzseitige Stromrichter umfasst Netzanschlüsse 27, 28 und 29, die an ein Drehstromnetz anschließbar sind und an die sich jeweils eine Netzdrossel 31, 32 beziehungsweise 33 anschließt. Über die Netzdrosseln 31, 32 und 33 sind die Netzanschlüsse 27 bis 29 jeweils mit dem Stromrichter verbunden. Dieser ist als Wechselrichter 112 ausgestaltet in Form einer mit der Grundfrequenz getakteten Einspeise-Rückspeise-Einheit.

An den Kompensationskondensator 42 ist über Spannungsanschlüsse 48, 49 eine externe Gleichspannungsquelle anschließbar. Der Einsatz dieser Gleichspannungquelle ist jedoch nicht zwingend erforderlich.

Der Vierquadrantensteller 144 wird von einer Regeleinheit 55 angesteuert, die eine Ansteuerlogik 57 umfaßt, welche mit dem Vierquadrantensteller 144 in elektrischer Verbindung steht, sowie ein Rechenglied 59 und ein Vergleichsglied 61. Das Rechenglied 59 weist drei Eingänge 63, 64, 65 auf und ist mit dem Vergleichsglied 61 verbunden, dem ein externer Eingang 67 zugeordnet ist.

Der Anschluß der Kompensationsschaltung 40 an den ersten Strompfad 18 erfolgt über zwei Kopplungsanschlüsse 69, 70, an die eine Spannungsmeßeinrichtung 72 angeschlossen ist. Mittels der Spannungsmeßeinrichtung 72 kann die in den ersten Strompfad 18 von der Kompensationsschaltung 40 eingekoppelte Kompensationsspannung Uₖ abgegriffen und über den Eingang 67 dem Vergleichsglied 61 als Ist-Wert vorgegeben werden. Hierzu ist die Spannungsmeßeinrichtung 72 über eine in der Zeichnung nicht dargestellte Verbindungsleitung mit dem Eingang 67 verbunden.

Mittels weiterer Spannungsmeßeinrichtungen, die zur Erzielung einer besseren Übersicht in der Zeichnung nicht dargestellt sind, können die Spannungen U₁₂, U₂₃ und U₃₁ zwischen den Netzanschlüssen 27, 28 und 29 abgegriffen und über die Eingänge 63, 64 und 65 dem Rechenglied 59 bereitgestellt werden.

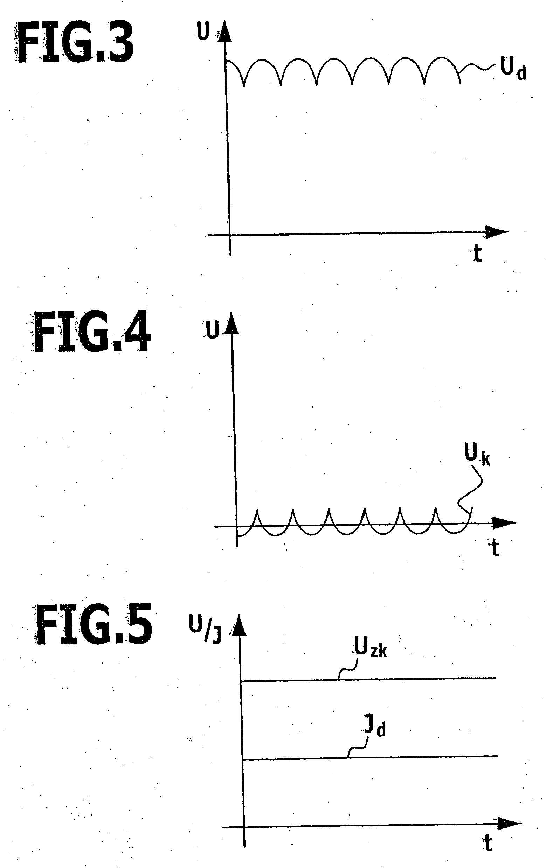

Der Frequenzumrichter 110 kann zur Energieversorgung eines Elektroantriebes herangezogen werden. Vom netzseitigen Stromrichter wird die an den Netzanschlüssen 27, 28 und 29 anliegende dreiphasige Wechselspannung in eine Gleichspannung umgerichtet, die an den Gleichspannungszwischenkreis 14 weitergegeben wird. Der zeitliche Verlauf der Ausgangsspannung U_{d} des netzseitigen Stromrichters ist in Figur 3 schematisch dargestellt. Die Ausgangsspannung U_{d} weist einen Gleichspannungsantell und einen Wechselspannungsanteil auf.

Der Wechselspannungsanteil der Ausgangsspannung U_{d} des Stromrichters kann vom Rechenglied 59 rechnerisch bestimmt werden aus den elektrischen Parametern des Stromrichters und den Spannungen U₁₂, U₂₃ und U₁₃ zwischen den Netzanschlüssen 27, 28 und 29. Der berechnete negative Wechselspannungsanteil wird als Soll-Wert dem Vergleichsglied 61 bereitgestellt, das mit dem Rechenglied 59 verbunden ist. Mittels des Vergleichsgliedes 61 kann der berechnete Soll-Wert mit dem von der Spannungsmeßeinrichtung 72 bereitgestellten Ist-Wert der Kompensationsspannung verglichen werden. Der zeitliche Verlauf des Ist-Wertes der Kompensationsspannung Uₖ ist in Figur 4 schematisch dargestellt.

Das Vergleichsglied 61 steht mit der Ansteuerlogik 57 in elektrischer Verbindung und stellt diesem ein Steuersignal bereit, aufgrund dessen die Ansteuerlogik 57 den Vierquadrantensteller 144 derart ansteuert, daß die in den ersten Strompfad 18 eingekoppelte Kompensationsspannung dem negativen Wechselspannungsanteil der Ausgangsspannung U_{d} des netzseitigen Stromrichters entspricht, so daß der Ist-Wert der Kompensationsspannung mit dem berechneten Soll-Wert identisch ist. Dies hat zur Folge, daß der Zwischenkreisstrom I_{d}, der vom Stromrichter zum Zwischenkreiskondensator 16 fließt, praktisch ohne Wechselanteil ist und daß folglich am Zwischenkreiskondensator 16 eine wechselanteilsfreie Zwischenkreisspannung U_{zk} anliegt, mit der der lastseitige Wechselrichter 21 versorgt werden kann. Der Einsatz der Kompensationsschaltung 40 mit dem vom Vierquadrantensteller 144 gesteuerten Kompensationskondensator 42, der in den ersten Strompfad 18 des Gleichspannungszwischenkreises 14 eine Kompensationsspannung einkoppelt, ermöglicht es somit auf konstruktiv einfache Weise dem lastseitigen Wechselrichter 21 eine praktisch wechselanteilsfreie Zwischenkreisspannung U_{zk} bereitzustellen. Der vom Kompensationskondensator 42 maximal zu kompensierende Spannungswert beträgt hierbei nur etwa 9% der Netzspannungsamplitude, da lediglich der Wechselanteil der gleichgerichteten Netzspannung zu kompensieren ist. Demzufolge kann die Kompensationsspannung kostengünstig und sehr verlustarm mittels MOSFET-Transistoren des Vierquadrantenstellers 144 bereitgestellt werden.

Es hat sich gezeigt, daß mittels der Schaltungsanordnung 50 Netzoberschwingungen sehr gering gehalten werden können, es kann nämlich ein THD-Wert (Total Harmonic Distortion) von nur 30% oder weniger erzielt werden.

Der Einsatz des Stromrichters 12 in Form eines netzseitigen Wechselrichters 112 ermöglicht nicht nur einen Speisebetrieb des Frequenzumrichters 110 zur Energieversorgung eines Elektroantriebes, sondern mittels des Frequenzumrichters 110 kann auch ein Rückspeisebetrieb durchgeführt werden, d. h. eine vom Elektoantrieb bereitgestellte Generatorspannung kann über den netzseitigen Wechselrichter 112 in das treibende Netz zurückgespeist werden.

Ein Rückspeisebetrieb gestaltet sich besonders vorteilhaft mit einer Grundfrequenztaktung des netzseitigen Wechselrichters 112 und mit einem niederkapazitiven Zwischenkreiskondensator 16.

## Patentansprüche

1. Schaltungsanordnung für einen Umrichter, mit einem Gleichspannungszwischenkreis (14), der zumindest einen zwischen einen ersten Strompfad (18) und einen zweiten Strompfad (19) des Gleichspannungszwischenkreises (14) geschalteten Zwischenkreiskondensator (16) umfaßt, und mit einer Kompensationsschaltung (40) umfassend eine Spannungsquelle (42) zum Einkoppeln einer Kompensationsspannung (Uₖ) in den ersten oder zweiten Strompfad (18, 19) des Gleichspannungszwischenkreises (14) in Reihe zum Zwischenkreiskondensator (16) sowie mit einem netzseitigen Stromrichter (12, 112), der an den Gleichspannungszwischenkreis (14) angeschlossen ist, wobei die Spannungsquelle als mindestens ein Kompensationskondensator (42) ausgebildet ist, **dadurch gekennzeichnet, daß** der netzseitige Stromrichter als mit der Grundfrequenz getaktete Einspeise-Rückspeise-Einheit (12, 112) ausgestaltet ist.

2. Schaltungsanordnung nach Anspruch 1, **dadurch gekennzeichnet, daß** an den mindestens einen Kompensationskondensator (42) eine externe Spannungsquelle anschließbar ist.

3. Schaltungsanordnung nach Anspruch 1 oder 2, **dadurch gekennzeichnet, daß** mittels der Kompensationsschaltung (40) eine Kompensationsspannung (Uₖ) einkoppelbar ist, die dem negativen Wechselspannungsanteil der Ausgangsspannung (U_{d}) des Stromrichters (12, 112) entspricht.

4. Schaltungsanordnung nach einem der voranstehenden Ansprüche, **dadurch gekennzeichnet, daß** die Kompensationsschaltung (40) eine elektronische Schalteinheit (44; 144) aufweist, an die die Spannungsquelle (42) angeschlossen ist.

5. Schaltungsanordnung nach Anspruch 4, **dadurch gekennzeichnet, daß** die elektronische Schalteinheit (44) als Zweiquadrantensteller ausgestaltet ist.

6. Schaltungsanordnung nach Anspruch 4, **dadurch gekennzeichnet, daß** die elektronische Schalteinheit als Vierquadrantensteller (144) ausgestaltet ist.

7. Schaltungsanordnung nach Anspruch 4, 5 oder 6, **dadurch gekennzeichnet, daß** die elektronische Schalteinheit (44; 144) mittels einer Regeleinheit (55) ansteuerbar ist, wobei die Regeleinheit (55) auf Basis eines Sollwert-Istwert-Vergleiches der elektronischen Schalteinheit (44; 144) zumindest ein Steuersignal bereitstellt.

8. Schaltungsanordnung nach Anspruch 7, **dadurch gekennzeichnet, daß** die Regeleinheit (55) eine Ansteuerlogik (57) aufweist, der ein Vergleichsglied (61) zum Vergleich eines Ist-Wertes mit einem Soll-Wert zugeordnet ist.

9. Schaltungsanordnung nach einem der voranstehenden Ansprüche, **dadurch gekennzeichnet, daß** die Kompensationsschaltung (40) ein Rechenglied (59) aufweist zur Berechnung des negativen Wechselspannungsanteils der Ausgangsspannung (U_{d}) des Stromrichters (12, 112).

10. Schaltungsanordnung nach einem der voranstehenden Ansprüche, **dadurch gekennzeichnet, daß** die Kompensationsschaltung (40) ein Glättungsfilter (46) aufweist.

11. Umrichter (10) mit einer Schaltungsanordnung (50, 150) nach einem der voranstehenden Ansprüche und mit einem lastseitig an den Gleichspannungszwischenkreis (14) angeschlossenen Wechselrichter (21).

## Claims

1. Circuitry for a converter, with a direct-current voltage intermediate circuit (14) which comprises at least one intermediate circuit capacitor (16) connected between a first current path (18) and a second current path (19) of the direct-current voltage intermediate circuit (14), and with a compensation circuit (40) comprising a voltage source (42) for coupling a compensation voltage (Uₖ) into the first or second current path (18, 19) of the direct-current voltage intermediate circuit (14) in series with the intermediate circuit capacitor (16) and with a network-side current converter (12, 112) which is connected to the direct-current voltage intermediate circuit (14), the voltage source being in the form of at least one compensation capacitor (42), **characterized in that** the network-side current converter is configured as feed-feedback unit (12, 112) clocked with the basic frequency.

2. Circuitry in accordance with claim 1, **characterized in that** an external voltage source is connectable to the at least one compensation capacitor (42).

3. Circuitry in accordance with claim 1 or 2, **characterized in that** a compensation voltage (Uₖ) corresponding to the negative alternating-current voltage component of the output voltage (U_{d}) of the current converter (12, 112) can be coupled in by means of the compensation circuit (40).

4. Circuitry in accordance with any one of the preceding claims, **characterized in that** the compensation circuit (40) comprises an electronic switch unit (44; 144) to which the voltage source (42) is connected.

5. Circuitry in accordance with claim 4, **characterized in that** the electronic switch unit (44) is configured as two-quadrant chopper.

6. Circuitry in accordance with claim 4, **characterized in that** the electronic switch unit is configured as four-quadrant chopper (144).

7. Circuitry in accordance with claim 4, 5 or 6, **characterized in that** the electronic switch unit (44; 144) is controllable by a control unit (55), with the control unit (55) providing the electronic switch unit (44; 144) with at least one control signal on the basis of a comparison of set value and actual value.

8. Circuitry in accordance with claim 7, **characterized in that** the control unit (55) comprises a control logic (57) having associated therewith a comparing element (61) for comparing an actual value with a set value.

9. Circuitry in accordance with any one of the preceding claims, **characterized in that** the compensation circuit (40) comprises a computing element (59) for calculating the negative alternating-current voltage component of the output voltage (U_{d}) of the current converter (12, 112).

10. Circuitry in accordance with any one of the preceding claims, **characterized in that** the compensation circuit (40) comprises a smoothing filter (46).

11. Converter (10) with a circuitry (50, 150) in accordance with any one of the preceding claims and with an inverter (21) connected on the load side to the direct-current voltage intermediate circuit (14).

## Revendications

1. Agencement de circuit pour un convertisseur ou variateur, avec un circuit intermédiaire de tension continue (14), qui comprend au moins un condensateur de circuit intermédiaire (16) monté entre un premier chemin de courant (18) et un deuxième chemin de courant (19) du circuit intermédiaire de tension continue (14), et avec un circuit de compensation (40), qui comprend une source de tension (42) pour injecter une tension de compensation (Uₖ) dans le premier ou le deuxième chemin de courant (18, 19) du circuit intermédiaire de tension continue (14) en série avec le condensateur de circuit intermédiaire (16), ainsi qu'avec un convertisseur de courant (12, 112) côté réseau, qui est raccordé au circuit intermédiaire de tension continue (14), ladite source de tension étant réalisée sous la forme d'au moins un condensateur de compensation (42),
**caractérisé en ce que** le convertisseur de courant côté réseau est configuré en tant que module d'alimentation-réinjection (12, 112) cadencé avec la fréquence de base.

2. Agencement de circuit selon la revendication 1, **caractérisé en ce qu'**il est possible de raccorder au dit au moins un condensateur de compensation (42), une source de tension externe.

3. Agencement de circuit selon la revendication 1 ou la revendication 2, **caractérisé en ce qu'**au moyen du circuit de compensation (40), il est possible d'injecter une tension de compensation (Uₖ), qui correspond à la fraction de tension alternative négative de la tension de sortie (U_{d}) du convertisseur de courant (12, 112).

4. Agencement de circuit selon l'une des revendications précédentes, **caractérisé en ce que** le circuit de compensation (40) présente une unité de commutation électronique (44; 144) à laquelle est raccordée la source de tension (42).

5. Agencement de circuit selon la revendication 4, **caractérisé en ce que** l'unité de commutation électronique (44) est réalisée sous la forme d'un régulateur deux quadrants.

6. Agencement de circuit selon la revendication 4, **caractérisé en ce que** l'unité de commutation électronique est réalisée sous la forme d'un régulateur quatre quadrants (144).

7. Agencement de circuit selon la revendication 4, 5 ou la revendication 6, **caractérisé en ce que** l'unité de commutation électronique (44; 144) peut être commandée au moyen d'une unité de régulation (55), l'unité de régulation (55) fournissant au moins un signal de commande sur la base d'une comparaison entre valeur de consigne et valeur réelle, à l'unité de commutation électronique (44; 144).

8. Agencement de circuit selon la revendication 7, **caractérisé en ce que** l'unité de régulation (55) présente une logique de commande (57) à laquelle est associé un organe de comparaison (61) pour comparer une valeur réelle à une valeur de consigne.

9. Agencement de circuit selon l'une des revendications précédentes, **caractérisé en ce que** le circuit de compensation (40) comprend un organe de calcul (59) pour calculer la fraction de tension alternative négative de la tension de sortie (U_{d}) du convertisseur de courant (12, 112).

10. Agencement de circuit selon l'une des revendications précédentes, **caractérisé en ce que** le circuit de compensation (40) comprend un filtre de lissage (46).

11. Convertisseur (10) comprenant un agencement de circuit (50, 150) selon l'une des revendications précédentes, et comprenant un onduleur (21) raccordé, du côté de la charge, au circuit intermédiaire de tension continue (14).
